# EUROPÄISCHE PATENTSCHRIFT

(11) **EP 1 186 859 B1**
(45) Veröffentlichungstag und Bekanntmachung des Hinweises auf die Patenterteilung: **04.10.2006**
(21) Anmeldenummer: 01120226.4
(22) Anmeldetag: 23.08.2001
(51) Int. Cl.: G01C 15/10

(54) **Vorrichtung zum lotrechten Ausrichten eines geodätischen Gerätes**
Device for aligning a surveying instrument along the vertical
Dispositif pour l'alignement vertical d'un appareil géodésique

(30) Priorität: 07.09.2000 DE 10045807
(43) Veröffentlichungstag der Anmeldung: 13.03.2002
(73) Patentinhaber: Trimble Jena GmbH, 07745 Jena (DE)
(72) Erfinder: Feist, Wieland, 07743 Jena (DE); Hahn, Wolfgang, 07616 Bürgel (DE); Smith, Lawrence, Dayton, OH 45419 (US)
(74) Vertreter: Geyer, Fehners & Partner

(56) Entgegenhaltungen:
- DE-A- 4 007 245
- DE-C- 19 716 304

## Beschreibung

Die Erfindung bezieht sich auf eine Vorrichtung zum lotrechten Ausrichten eines geodätischen Gerätes über einem Bodenpunkt.

Für Vermessungszwecke ist es erforderlich, geodätische Geräte, wie beispielsweise Tachymeter oder Theodoliten, möglichst genau über einem Bodenpunkt, der insbesondere ein geodätischer Festpunkt sein kann, zu zentrieren. In gleicher Weise muß auch das Zubehör, darunter Reflektoren oder Zieltafeln, über einem Bodenpunkt ausgerichtet werden, wobei für eine möglichst genaue Vermessung jeweils eine lotrechte Ausrichtung der Stehachse zu der Ebene erforderlich ist, in welcher der Bodenpunkt liegt.

Als Hilfsmittel zum lotrechten Ausrichten zu einem Bodenpunkt werden vielfach optische Lote eingesetzt. Diese umfassen in der Regel eine Beobachtungseinrichtung, beispielsweise in Form eines kleinen Fernrohres, mit dem der Bodenpunkt anvisiert wird. Dabei ist die optische Achse der Beobachtungseinrichtung definiert zur Stehachse des geodätischen Gerätes ausgerichtet bzw. ist mit dieser identisch.

Überdies ist häufig eine optische Markierung in den Beobachtungsstrahlengang eingekoppelt, die je nach Betriebsweise auf den Bodenpunkt auszurichten ist oder diesen kennzeichnet. Im ersteren Falle wird die Position des geodätischen Gerätes über dem Bodenpunkt so lange verändert, bis die gewünschte Übereinstimmung erreicht ist. Im zweiten Fall wird aus der Position des geodätischen Gerätes der Bodenpunkt bestimmt. Aufgrund der definierten Lage des Beobachtungsstrahlengangs zu dem geodätischen Gerät befindet sich dieses dann in einer exakt bestimmbaren Position zu dem Bodenpunkt.

Derartige optische Lote werden meist unmittelbar in die geodätischen Geräte eingebaut. Bei Tachymetern oder Theodoliten, die in einen Dreifuß eingesteckt werden, ist es auch möglich, mittels separater Lotgeräte zunächst der Dreifuß bzw. dessen Aufnahmemechanismus für das anzukoppelnde Tachymeter bzw. den Theodoliten über einem Bodenpunkt zu zentrieren, hiernach das Lotgerät zu entfernen und durch das Tachymeter bzw. den Theodolit zu ersetzen.

Weiterhin ist bekannt, die Hilfsmittel zum lotrechten Ausrichten als optoelektronische Empfangseinrichtung auszubilden, wie dies beispielsweise in DE 197 16 304 C1 beschrieben ist. Dort ist ein geodätisches Gerät, das mittels eines Dreifußes auf einem Stativ angeordnet ist, mit einer opto-elektronischen Abbildungseinrichtung für den Bodenpunkt ausgestattet, über dem das Gerät zu Meßzwecken aufzustellen ist. Der Abbildungsstrahlengang verläuft dabei parallel zu der Lotlinie über dem Bodenpunkt; das Gerät ist über dem Bodenpunkt ausgerichtet, wenn der Bodenpunkt auf der opto-elektronischen Empfangseinrichtung abgebildet wird.

Nun ist es unter ungünstigen Sichtverhältnissen bisweilen schwierig, ein solches Gerät mittels eines optischen Lotes genau auf den Bodenpunkt auszurichten. Es wurden daher bereits sogenannte Laserlote vorgeschlagen, mit denen das geodätische Gerät unter Verwendung eines Laserstrahls lotrecht zu der Zielebene ausgerichtet werden kann, in der sich der Bodenpunkt befindet. Dazu wird der auftreffende Lichtfleck des Laserstrahls mit dem Bodenpunkt zur Deckung gebracht. Aufgrund des definiert zu dem Gerät verlaufenden Laserstrahls wird eine hinreichend genaue Ausrichtung des geodätischen Gerätes zu dem Bodenpunkt erreicht.

So ist z.B. in DE 40 07 245 A die Verwendung eines Laserstrahls zum Zentrieren eines geodätischen Instrumentes über einem Bodenpunkt beschrieben. Bei derartigen Laserloten besteht jedoch das Problem, daß bei sehr großer Helligkeit der Umgebung, z.B. bei grellem Tageslicht, der in die Zielebene projizierte Laserfleck nicht oder nicht ausreichend deutlich erkennbar ist, da dieser überstrahlt wird. Zwar wäre es möglich, die Helligkeit des Laserflecks durch die Verwendung eines leistungsfähigeren Laseremitters zu verbessern und damit die Wahrnehmbarkeit bei großer Umgebungshelligkeit zu verstärken, jedoch birgt die Verwendung von Lasern größerer Leistung ein erhöhtes Gefährdungspotential für die Anwender der geodätischen Geräte, so daß in diesem Fall zusätzliche konstruktive Maßnahmen erforderlich wären, um gesundheitliche Beeinträchtigungen bei nicht sachgerechtem Gebrauch zu verhindern.

Davon ausgehend liegt der Erfindung die Aufgabe zugrunde, eine Vorrichtung der eingangs genannten Art zu schaffen, die unter allen Lichtverhältnissen eine genaue Ausrichtung des geodätischen Gerätes über dem Bodenpunkt erlaubt.

Diese Aufgabe wird gelöst durch eine Vorrichtung gemäß Anspruch 1.

Mit der erfindungsgemäßen Vorrichtung läßt sich auch unter ungünstigen Lichtverhältnissen und Sichtbedingungen in einfacher Weise eine exakte Ausrichtung des geodätischen Gerätes verwirklichen. So erfolgt bei schlechten Sichtbedingungen die Ausrichtung des Gerätes über den in die Zielachse eingekoppelten Laserstrahl. Bei extremer Umgebungshelligkeit hingegen kann die Ausrichtung durch Einkopplung des Strahlengangs der optischen Beobachtungseinrichtung in die Zielachse erfolgen, ohne daß in diesem Fall ein leistungsstärkerer Laser benötigt würde.

Durch die Verwendung eines gemeinsamen optischen Einkoppelelementes läßt sich die erfindungsgemäße Anordnung mit geringem technischen Aufwand verwirklichen.

In einer vorteilhaften Ausgestaltung der Erfindung ist die Lage des optischen Einkoppelelementes innerhalb des geodätischen Gerätes zwischen zwei Positionen umschaltbar. Dabei ist in einer ersten Position lediglich der Strahlengang der optischen Beobachtungseinrichtung in die Zielachse eingekoppelt, wohingegen in der zweiten Position nur der Laserstrahl in die Zielachse eingekoppelt ist.

Somit erfolgt die Ausrichtung des geodätischen Gerätes entweder mittels der optischen Beobachtungseinrichtung oder aber, nach erfolgter Umschaltung des Einkoppelelementes von der einen in die andere Position, anhand des durch die Lasereinrichtung in der Zielebene, in der sich der Bodenpunkt befindet, erzeugten Laserflecks. Für eine besonders einfache Handhabung dieser Umschaltung kann das Ein-und Ausschalten der Lasereinrichtung unmittelbar an die Umschaltung des optischen Einkoppelelementes gebunden werden.

Vorzugsweise ist das Einkoppelelement ein Prisma, das eine erste Reflexionsfläche zur Einkopplung des Strahlengangs der optischen Beobachtungseinrichtung in die Zielachse und eine zweite Reflexionsfläche zur Einkopplung des Laserstrahls in die Zielachse aufweist. Zum Umschalten zwischen der ersten Stellung und der zweiten Stellung ist das Prisma gegenüber dem geodätischen Gerät bewegbar angeordnet. Durch die Verwendung eines bewegbaren Prismas läßt sich einerseits eine hohe Genauigkeit der Ausrichtung des Strahlengangs der optischen Beobachtungseinrichtung, des Laserstrahls und der Zielachse zu dem geodätischen Gerät verwirklichen, andererseits bleibt die Handhabung bei der Betätigung der wahlweise verwendbaren Lote einfach.

In einer weiteren vorteilhaften Ausgestaltung sind die Beobachtungseinrichtung und die Lasereinrichtung unter Zwischenschaltung des Prismas in einer gemeinsamen Hülse angeordnet. Zur Umschaltung ist die Hülse entlang ihrer Längsachse gegenüber dem geodätischen Gerät axial bewegbar. Überdies ist sichergestellt, daß in zwei definierten Endlagen des Verstellweges der Hülse eine Ausrichtung der Hülse zu dem geodätischen Gerät gewährleistet ist. Diese beiden Endlagen der Hülse sind mit den beiden Schaltstellungen des optischen Einkoppelelementes, d. h. beispielsweise des Prismas, verknüpft, so daß durch die Axialbewegung der Hülse zwischen der Betriebsweise als Laserlot und der Betriebsweise als optischem Lot gewählt werden kann. Durch die Anordnung sämtlicher für den Ausrichtungsvorgang erforderlichen Bauelemente in einer gemeinsamen Hülse läßt sich diese als Modul vormontieren und in vielfältiger Weise in unterschiedlichen geodätischen Geräten einsetzen. Der modulare Aufbau erlaubt überdies eine besonders genaue Ausrichtung des Strahlengangs der optischen Beobachtungseinrichtung und des Laserstrahls in bezug auf die Zielachse. Die Zentrierung zu dem geodätischen Gerät erfolgt dann über die Lagerung der Hülse.

In einer konstruktiv besonders vorteilhaften Ausführungsvariante sind der Strahlengang der optischen Beobachtungseinrichtung und der Laserstrahl in Richtung der Längsachse der Hülse ausgerichtet, wohingegen die Zielachse einen rechten Winkel zu der Längsachse der Hülse einnimmt.

Weiterhin ist es möglich, das Einkoppelelement als einen schwenkbaren Spiegel auszubilden, der unter einem ersten Einstellwinkel den Strahlengang der optischen Beobachtungseinrichtung oder den Laserstrahl in die Zielachse einkoppelt und unter einem zweiten Einstellwinkel den jeweils entsprechend anderen Strahlengang bzw. Strahl in die Zielachse lenkt. Der Spiegel kann dabei als Drehspiegel oder auch als Klappspiegel ausgebildet sein. Im letzteren Fall lenkt der Spiegel unter dem ersten Einstellwinkel entweder den Strahlengang der optischen Beobachtungseinrichtung oder den Laserstrahl ab, während der jeweils andere Strahlengang bzw. Strahl unterbrochen wird. Unter dem zweiten Einstellwinkel wird dann der unterbrochene Strahlengang bzw. Strahl ohne Ablenkung in die Zielachse eingekoppelt, wohingegen der andere Strahl bzw**.** Strahlengang gesperrt wird.

In einer weiteren Ausgestaltungsform ist das Einkoppelelement als eine feststehende, zu dem geodätischen Gerät definiert ausgerichtete optische Umlenkeinrichtung mit einer optisch selektiven Schicht ausgebildet. In einer ersten Variante ist die optisch selektive Schicht für Tageslicht, das unter einem vorgegebenen Winkel auftrifft, im visuellen Bereich durchlässig, hingegen für unter einem abweichenden Winkel auftreffendes Laserlicht reflektierend. Umgekehrt ist in einer zweiten Ausführungsvariante die optisch selektive Schicht für unter einem schrägen Einfallswinkel auftreffendes Licht im visuellen Bereich reflektierend, hingegen für unter dem gleichen schrägen Einfallswinkel auftreffendes Laserlicht durchlässig.

Auf diese Weise ist eine Positionsveränderung des Einkoppelelementes nicht erforderlich, vielmehr ist dieses fest positioniert, wodurch mechanischer Verschleiß vermieden und eine dauerhaft hohe Genauigkeit der Ausrichtung der Strahlengänge relativ zu dem geodätischen Gerät gewährleistet ist. Die Umschaltung zwischen der Betriebsweise als visuelles optisches Lot und der Betriebsweise als Laserlot erfolgt dann lediglich über das Ein- und Ausschalten der Lasereinrichtung. Überdies kann bei dieser Ausgestaltungsform der in die Zielebene projizierte Laserfleck auch über die optische Beobachtungseinrichtung visuell beobachtet werden.

Erfolgt die Ausrichtung des geodätischen Gerätes unter Nutzung der Lasereinrichtung, so dient der in die Zielachse eingekoppelte Laserstrahl bzw. der projizierte Lichtfleck als Markierung, die mit dem Bodenpunkt in Übereinstimmung zu bringen ist. In diesem Fall kann auf eine gesonderte Ausrichtmarkierung, beispielsweise ein Strichkreuz, verzichtet werden, so daß sich der Aufbau des Gerätes entsprechend vereinfachen läßt.

Da die Zielachse vertikal ausgerichtet ist, sollte in einer weiteren ergonomisch vorteilhaften Ausgestaltung der Strahlengang der optischen Beobachtungseinrichtung orthogonal zur Zielachse ausgerichtet sein, was die visuelle Anzielung des Bodenpunktes wesentlich erleichtert.

Hingegen kann der Laserstrahl schon von der Laserquelle ausgehend wie die Zielachse auch vertikal ausgerichtet sein und so ohne Notwendigkeit einer Richtungsänderung unmittelbar in die Zielachse eingekoppelt werden. Es ist aber auch möglich, den Laserstrahl ebenso wie den Strahlengang der optischen Beobachtungseinrichtung an dem optischen Einkoppelelement aus einer Orthogonalrichtung in die Zielachse einzukoppeln.

Die Laserquelle kann dabei auf derselben Seite des geodätischen Gerätes angeordnet werden, auf der sich auch die Baugruppen der optischen Beobachtungseinrichtung befinden. Die Laserquelle kann dort sowohl unterhalb oder auch oberhalb dieser Baugruppen angeordnet sein, so daß sich für den Konstrukteur ein optimaler Geräteaufbau finden läßt.

Es ist auch möglich, daß der zur Zielachse orthogonale Laserstrahl mit dem ebenfalls zur Zielachse orthogonalen Strahlengang der optischen Beobachtungseinrichtung bei einer Betrachtung in Richtung der Zielachse einen Winkel ≠ 0° einschließt.

Die Erfindung wird nachfolgend anhand von drei in der Zeichnung dargestellten Ausführungsbeispielen näher erläutert. Die Zeichnung zeigt in
- Fig.1: ein erstes Ausführungsbeispiel einer Vorrichtung zum lotrechten Ausrichten eines geodätischen Gerätes zu einem Bodenpunkt in einer Teilschnittdarstellung,
- Fig.2: ein zweites Ausführungsbeispiel einer solchen Vorrichtung in einer Teilschnittdarstellung, und in
- Fig.3: ein drittes Ausführungsbeispiel, wobei hier lediglich eine optische Beobachtungseinrichtung, eine Lasereinrichtung sowie ein optisches Einkoppelelement in bezug auf einen Strahlengang einer optischen Beobachtungseinrichtung, einen Laserstrahl und eine Zielachse schematisch dargestellt sind.

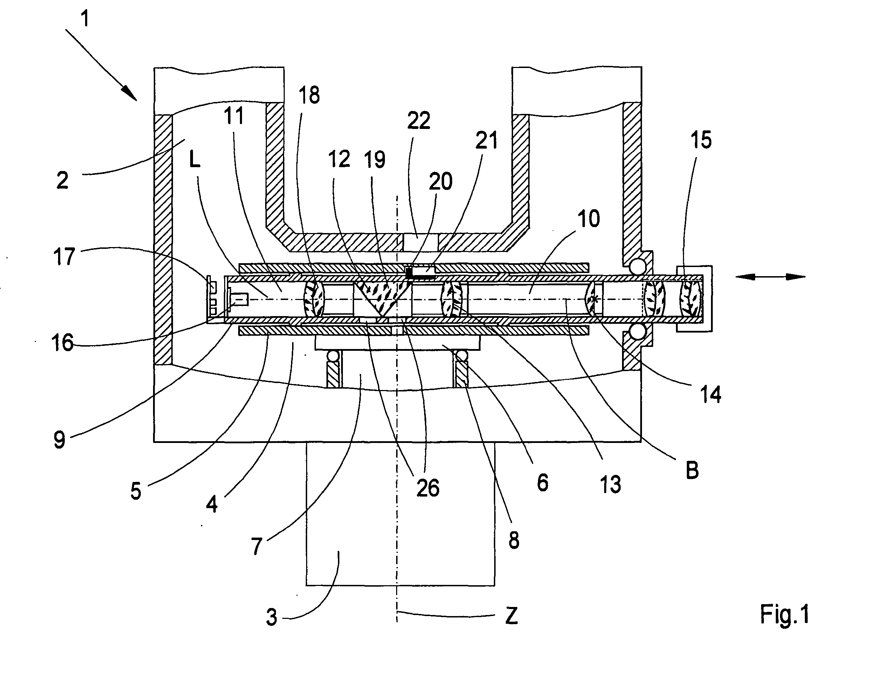

Das erste Ausführungsbeispiel in Fig.1 zeigt ein geodätisches Gerät in Form eines Tachymeters 1, wobei hier lediglich ein unterer Abschnitt einer Stütze 2 des Tachymeters 1 genauer dargestellt ist. Über einen an der Unterseite der Stütze 2 vorgesehenen Steckzapfen 3 läßt sich das Tachymeter 1 in einen Sockel, beispielsweise einen Dreifuß oder ein Stativ, einsetzen. Dabei übernimmt der Steckzapfen 3 eine Zentrierfunktion.

Innerhalb der Stütze 2 ist eine Vorrichtung zum lotrechten Ausrichten des Tachymeters 1 zu einem Bodenpunkt vorgesehen, die sowohl ein optisches Lot als auch ein Laserlot umfaßt. Diese Vorrichtung bildet hier ein in sich geschlossenes Modul 4, das in die Stütze 2 eingesetzt und zu dieser exakt ausgerichtet ist, so daß eine auf den Bodenpunkt auszurichtende optische Zielachse Z eine Zentrierung des Tachymeters 1 an einer Senkrechten über dem Bodenpunkt erlaubt.

Das Modul 4 ist über eine Lagerhülse 5 auf einem Achsteller 6 befestigt, der wiederum mit einem Drehzapfen 7 in einer an der Stütze 2 vorgesehenen Buchse 8 um die Zielachse Z drehbar gelagert und in Richtung der Zielachse Z axial abgestützt ist.

In der Lagerhülse 5 des Moduls 4 ist eine weitere Hülse 9 angeordnet, deren Längsachse orthogonal zu der Zielachse Z verläuft. Die Hülse 9 ist innerhalb der Lagerhülse 5 entlang ihrer Längsachse gleitend beweglich geführt. Sie dient als Halterung für eine optische Beobachtungseinrichtung 10 sowie eine Lasereinrichtung 11, die hier koaxial zueinander angeordnet und durch ein ebenfalls in der Hülse 9 liegendes optisches Einkoppelelement 12 voreinander getrennt sind.

Dieses optische Einkoppelelement 12 ist über die Hülse 9 zu den weiteren Funktionselementen des Tachymeters 1 exakt ausgerichtet und koppelt den Strahlengang B der optischen Beobachtungseinrichtung 10 wie auch den Laserstrahl L der Lasereinrichtung 11 in die über einem Bodenpunkt lotrecht auszurichtende Zielachse Z ein.

Die optische Beobachtungseinrichtung 10 umfaßt ein in der Hülse 9 angeordnetes optisches Fernrohr mit einem Beobachtungsobjektiv 13, einer Feldlinse 14 mit einer Ausrichtungsmarkierung in Form eines Strichkreuzes sowie ein Okular 15. Anstelle des Strichkreuzes können auch andere geometrische Muster, beispielsweise Gitter oder Strichskalen als Ausrichtmarkierung verwendet werden, welche beim Blick durch das Okular 15 visuell wahrnehmbar sind.

Zwecks Ausrichtung des Tachymeters 1 über dem Bodenpunkt wird dieses gegebenenfalls gemeinsam mit seinem Dreifuß solange verschoben, bis sich der Bodenpunkt in einer gewünschten Position zu der Ausrichtmarkierung befindet. Mit geodätischen Geräten anderer Ausführung ist es in umgekehrter Weise möglich, einen gewünschten Bodenpunkt im Gelände zu markieren, wobei jedoch die Position des geodätischen Geräts anhand weiterer Umgebungspunkte genau bestimmt werden muß.

Die koaxial zu der optischen Beobachtungseinrichtung 10 angeordnete Lasereinrichtung 11 umfaßt eine auf der Längsachse der Hülse 9 positionierte Laserdiode 16, die zwecks Versorgung mit einer Betriebsspannung mit einer am Ende der Hülse 9 angeordneten Leiterplatte 17 der Laserdiode 16 verbunden ist. Weiterhin umfaßt die Lasereinrichtung 11 ein Projektionsobjektiv 18 für den Laserstrahl L.

Der Laserstrahl L wie auch der Strahlengang B treffen auf das optische Einkoppelelement 12, das hier in Form eines rücksichtigen Prismas 19 ausgebildet ist. Dieses Prisma 19 weist zwei jeweils unter einem Winkel von 45° zu der Zielachse Z geneigte Reflexionsflächen auf. Dabei weist eine erste Reflexionsfläche zu der optischen Beobachtungseinrichtung 10 und die zweite, gegenüberliegende Reflexionsfläche zu der Lasereinrichtung 11, wobei beide Reflexionsflächen einen Winkel von 90° miteinander einschließen.

Die Reflexionsflächen lenken den Strahlengang B und den Laserstrahl L in zu der Zielachse Z parallele Strahlengänge um. Durch eine Verschiebung der Hülse 9 in Richtung ihrer Längsachse kann in einer ersten Endlage der Strahlengang B in die Zielachse Z eingekoppelt werden. Dieser Zustand ist in Fig.1 dargestellt.

Wird hingegen in Fig.1 die Hülse 9 nach rechts verschoben, so kann in der damit erreichbaren zweiten Endlage der Laserstrahl L in die Zielachse Z eingekoppelt werden. Dazu weisen die Hülse 9 wie auch die Lagerhülse 5 jeweils geeignete Lichtdurchtrittsöffnungen 26 auf.

Über eine axiale Verschiebung der Hülse läßt sich somit zwischen einer Betriebsweise als optisches Lot und einer Betriebsweise als Laserlot umschalten. Hierzu ist lediglich die Hülse 9 in die gewünschte Position zu ziehen. Dabei ist es weiterhin möglich, das Ein- und Ausschalten der Lasereinrichtung 1 an die Stellung der Hülse 9 in der Lagerhülse 5 zu koppeln, so daß lediglich dann Betriebsspannung die Laserdiode 16 gelegt ist, wenn sich das Prisma 19 in einer Stellung zur Einkopplung des Laserstrahls L in die Zielachse Z befindet.

Zur leichteren Ansteuerung der beiden genannten Stellungen des Prismas 19 sind zwischen der Hülse 9 und der Lagerhülse 5 geeignete Axialanschläge vorgesehen, so daß die beiden Schaltpositionen einfach und sicher durch manuelles Verschieben der Hülse 9 eingestellt werden können.

In dem dargestellten Ausführungsbeispiel ist zu diesem Zweck an der Außenseite der Hülse 9 ein Anschlagzapfen 20 vorgesehen, der in einer an der Lagerhülse 5 ausgebildeten Längsnut 21 geführt ist. Bei einer entsprechenden Abstimmung der Breite bzw. des Durchmessers des Anschlagzapfens 20 und der Breite der Längsnut 21 kann der Anschlagzapfen 20 gleichzeitig als Sicherung gegen ein Verdrehen der Hülse 9 gegenüber der Lagerhülse 5 dienen. Zur Nachjustierung der axialen Position des Anschlagzapfens 20 ist in der Stütze 2 im Bereich des Verstellweges des Anschlagszapfens 20 eine Zugangsöffnung 22 vorgesehen, die im Normalbetrieb des Tachymeters 1 durch einen hier nicht dargestellten Verschluß abgedeckt ist.

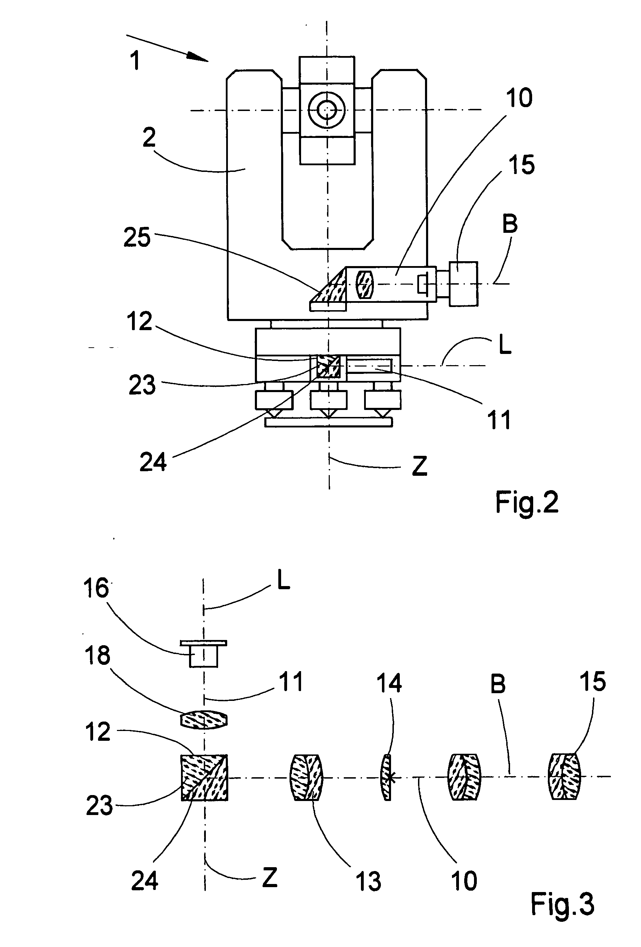

Fig.2 zeigt ein zweites Ausführungsbeispiel der erfindungsgemäßen Vorrichtung zum lotrechten Ausrichten eines geodätischen Gerätes über einem Bodenpunkt, wobei hier das geodätische Gerät wiederum ein Tachymeter 1 ist.

Die Vorrichtung umfaßt ebenfalls eine optische Beobachtungseinrichtung 10 sowie eine Lasereinrichtung 11, deren Strahlen B bzw. L im Unterschied zu dem ersten Ausführungsbeispiel über ein feststehendes optisches Einkoppelelement 12, das zu dem geodätischen Gerät bzw. Tachymeter 1 definiert ausgerichtet ist, gleichzeitig in die auf den Bodenpunkt auszurichtende Zielachse Z eingekoppelt sind.

Dazu ist hier das Einkoppelelement 12 als Teilerwürfel 23 mit einer optisch selektiven Schicht 24 ausgebildet, welche das Laserlicht reflektiert, jedoch das Licht im sichtbaren Bereich hindurchläßt.

Wie Fig.2 entnommen werden kann, sind sowohl der Strahlengang B als auch der Laserstrahl L orthogonal zu der Zielachse Z angeordnet, wobei die optische Beobachtungseinrichtung 10 mit dem Okular 15 oberhalb der Lasereinrichtung 11 angeordnet ist. Zur Umlenkung des Strahlengangs B auf den Teilerwürfel 23 umfaßt die optische Beobachtungseinrichtung 10 ein in der Verlängerung der Zielachse Z angeordnetes optisches Umlenkelement 25, das beispielsweise als Umlenkspiegel oder auch als Prisma ausgebildet sein kann.

In einer alternativen Ausführungsform, die als drittes Ausführungsbeispiel in Fig.3 schematisch angedeutet ist, liegt der Teilerwürfel 23 im Kreuzungsbereich der Zielachse Z und des Strahlengangs B. Die Einkopplung des Laserstrahls L erfolgt aus einer Richtung in Fortsetzung der Zielachse Z durch den Teilerwürfel 23 hindurch. Dazu kann die Lasereinrichtung mit ihrer Laserdiode 16 koaxial zu der Zielachse Z angeordnet werden.

Es ist jedoch auch möglich, die Laserdiode 16 an einer zu der Zielachse Z orthogonalen Achse auszurichten und den Laserstrahl L entsprechend dem Strahlengang B in Fig.2 auf den Teilerwürfel 23 umzulenken. Dessen selektive Schicht 24 ist bei dem dritten Ausführungsbeispiel jedoch derart auszubilden, daß das Laserlicht durch die Schicht 24 unbeeinflußt hindurchtritt, hingegen das Licht im sichtbaren Bereich aus der Zielachse Z in Richtung des Strahlengangs B reflektiert wird.

Wie das zweite und dritte Ausführungsbeispiel veranschaulichen, können bei Verwendung eines feststehenden optischen Einkoppelelementes 12 die optische Beobachtungseinrichtung 10 und die Lasereinrichtung 11 räumlich relativ frei zueinander angeordnet werden. Bei dem in Fig.2 dargestellten Tachymeter 1 befindet sich beispielsweise die optische Beobachtungseinrichtung 10 in der Stütze 2 des Tachymeters 1, wohingegen die Lasereinrichtung 11 in einem Abschnitt eines hier nicht dargestellten Sockels, der beispielsweise als Stativ oder Dreifuß ausgebildet sein kann, angeordnet ist. Es ist jedoch auch möglich, die optische Beobachtungseinrichtung 10 in dem Sockel und die Lasereinrichtung 11 in der Stütze 2 oder auch beide Baugruppen gemeinsam innerhalb der Stütze 2 oder innerhalb des Sockels anzuordnen.

Die in Fig.2 und Fig.3 dargestellten Vorrichtungen lassen sich in Abhängigkeit von den Helligkeitsverhältnissen als optisches Lot oder auch als Laserlot verwenden. Weiterhin ist es möglich, den von der Lasereinrichtung 11 in der Zielebene erzeugten Lichtfleck über die Beobachtungseinrichtung 10 anzuvisieren, so daß eine sehr genaue Kontrolle der Übereinstimmung des Lichtflecks mit dem Bodenpunkt möglich ist.

Überdies kann der Lichtfleck in diesen Fällen auch als Ausrichtmarkierung verwendet werden, so daß in einer vereinfachten Ausführungsvariante eine in den Strahlengang B oder die Zielachse Z ansonsten für die Betriebsweise als optisches Lot bevorzugt einzukoppelnde Ausrichtungsmarkierung weggelassen werden kann.

Die vorstehend beschriebenen Ausführungsbeispiele ermöglichen eine präzise Ausrichtung eines geodätischen Gerätes zu einem Bodenpunkt unabhängig von den Helligkeitsverhältnissen der Umgebung. Dabei bleibt das geodätische Gerät in seinen Abmessungen kompakt. Zudem läßt sich der Einsatz eines stärkeren Lasers vermeiden.

## Patentansprüche

1. Vorrichtung zum lotrechten Ausrichten eines geodätischen Gerätes über einem Bodenpunkt, umfassend
- eine optische Beobachtungseinrichtung (10) zur visuellen Anzielung des Bodenpunktes mittels eines Strahlengangs (B),
**dadurch gekennzeichnet, daß**
- eine Lasereinrichtung (11) zur Erzeugung eines Laserstrahls (L) und
- ein optisches Einkoppelelement (12) vorhanden sind, wobei
- über das Einkoppelelement (12) der Laserstrahl (L) und der Strahlengang (B) der optischen Beobachtungseinrichtung (10) in eine gemeinsame, auf den Bodenpunkt lotrecht auftreffende optische Zielachse (Z) einkoppelbar sind.

2. Vorrichtung nach Anspruch 1, **dadurch gekennzeichnet, daß** das optische Einkoppelelement (12) umschaltbar ist zwischen einer ersten Stellung, in welcher der Strahlengang (B) in die Zielachse (Z) eingekoppelt ist und einer zweiten Stellung, in welcher der Laserstrahl (L) in die Zielachse (Z) eingekoppelt ist.

3. Vorrichtung nach Anspruch 2, **dadurch gekennzeichnet, daß** das Einkoppelelement (12) ein Prisma (19) ist, das eine erste Reflexionsfläche zur Einkopplung des Strahlengangs (B) in die Zielachse (Z) und eine zweite Reflexionsfläche zur Einkopplung des Laserstrahls (L) in die Zielachse (Z) aufweist.

4. Vorrichtung nach Anspruch 3, **dadurch gekennzeichnet, daß** die Beobachtungseinrichtung (10) und die Lasereinrichtung (11) unter Zwischenschaltung des Prismas (19) gemeinsam in einer Hülse (9) angeordnet sind, wobei die Hülse (9) entlang ihrer Längsachse bewegbar ist und in zwei Endlagen ihres Verstellweges definiert zu der Zielachse (Z) ausgerichtet ist.

5. Vorrichtung nach Anspruch 4, **dadurch gekennzeichnet, daß** der Strahlengang (B) und der Laserstrahl (L) in Richtung der Längsachse der Hülse (9) ausgerichtet sind und die Zielachse (Z) einen rechten Winkel zur Längsachse der Hülse (9) einnimmt.

6. Vorrichtung nach Anspruch 1 oder 2, **dadurch gekennzeichnet, daß** das Einkoppelelement (12) ein um eine Drehachse schwenkbarer Spiegel ist, der unter einem ersten Einstellwinkel entweder den Strahlengang (B) oder den Laserstrahl (L) in die Zielachse (Z) einkoppelt und unter einem zweiten Einstellwinkel den jeweils entsprechenden anderen Strahl in die Zielachse (Z) einkoppelt.

7. Vorrichtung nach Anspruch 1, **dadurch gekennzeichnet, daß** das Einkoppelelement (12) eine relativ zu dem geodätischen Gerät feststehend ausgerichtete optische Umlenkeinrichtung mit einer optisch selektiven Schicht (24) ist, wobei die Schicht (24) entweder für unter einem schrägen Einfallswinkel auftreffendes Licht im visuellen Bereich durchlässig, jedoch für unter diesem Einfallswinkel auftreffendes Laserlicht reflektierend ist, oder aber für unter einem schrägen Einfallswinkel auftreffendes Licht im visuellen Bereich reflektierend, jedoch für auftreffendes Laserlicht durchlässig ist.

8. Vorrichtung nach Anspruch 6 oder 7, **dadurch gekennzeichnet, daß** der Strahlengang (B) und die Zielachse (Z) orthogonal zueinander angeordnet sind.

9. Vorrichtung nach einem der Ansprüche 6 bis 8, **dadurch gekennzeichnet, daß** der Laserstrahl (L) und die Zielachse (Z) orthogonal zueinander angeordnet sind.

10. Vorrichtung nach einem der Ansprüche 1 bis 9, **dadurch gekennzeichnet, daß** in dem Strahlengang (B) eine zu dem Bodenpunkt auszurichtende Strichmarke angeordnet ist.

## Claims

1. Apparatus for the vertical orientation of a geodetic instrument over a ground point, comprising
- an optical observation device (10) for the visual sighting of the ground point by means of a beam path (B),
**characterised in that**
- a laser device (11) for generation of a laser beam (L) and
- an optical input element (12) are provided, wherein
- the laser beam (L) and the beam path (B) of the optical observation device (10) can be input by way of the input element (12) into an optical target axis (Z) impinging vertically on the ground point.

2. Apparatus as claimed in Claim 1, **characterised in that** the optical input element (12) is switchable between a first position in which the beam path (B) is input into the target axis (Z) and a second position in which the laser beam (L) is input into the target axis (Z).

3. Apparatus as claimed in Claim 2, **characterised in that** the input element (12) is a prism (19) which has a first reflection surface for input of the beam path (B) into the target axis (Z) and a second reflection surface for input of the laser beam (L) into the target axis (Z).

4. Apparatus as claimed in Claim 3, **characterised in that** the observation device (10) and the laser device (11) are jointly disposed in a sleeve (9) with the prism (19) interposed, wherein the sleeve (9) is movable along its longitudinal axis and is oriented definitively with respect to the target axis (Z) in two end positions of its adjustment path.

5. Apparatus as claimed in Claim 4, **characterised in that** the beam path (B) and the laser beam (L) are oriented in the direction of the longitudinal axis of the sleeve (9) and the target axis (Z) assumes a right angle with respect to the longitudinal axis of the sleeve (9).

6. Apparatus as claimed in Claim 1 or 2, **characterised in that** the input element (12) is a mirror which is pivotable about an axis of rotation and which inputs either the beam path (B) or the laser beam (L) into the target axis (Z) at a first adjustment angle and inputs the respective other beam into the target axis (Z) at a second adjustment angle.

7. Apparatus as claimed in Claim 1, **characterised in that** the input element (12) is an optical deflecting device which is oriented so as to be stationary relative to the geodetic instrument and has an optically selective coating (4), wherein the coating (24) is either transmissive for daylight in the visible range which impinges at an oblique angle of incidence, but is reflective for laser light impinging at this angle of incidence, or reflects light in the visible range which impinges at an oblique angle of incidence but is transmissive for impinging laser light.

8. Apparatus as claimed in Claim 6 or 7, **characterised in that** the beam path (B) and the target axis (Z) are disposed orthogonally with respect to one another.

9. Apparatus as claimed in any one of Claims 6 to 8, **characterised in that** the laser beam (L) and the target axis (Z) are disposed orthogonally with respect to one another.

10. Apparatus as claimed in any one of Claims 1 to 9, **characterised in that** a locating mark to be oriented with respect to the ground point is disposed in the beam path (B).

## Revendications

1. Dispositif pour l'orientation verticale d'un appareil géodésique au-dessus d'un point du sol, comprenant
- un dispositif d'observation optique (10) pour viser le point du sol au moyen d'un parcours de rayon (B),
**caractérisé en ce que**
- il est prévu un dispositif à laser (11) pour produire un rayon laser (L) et
- un élément de couplage optique (12),
- le rayon laser (L) et le parcours de rayon (B) du dispositif d'observation optique (10) pouvant être couplé, à travers l'élément de couplage (12), à l'intérieur d'un axe de cible optique (Z) parvenant verticalement sur le point du sol.

2. Dispositif selon la revendication 1, **caractérisé en ce que** l'élément de couplage optique (12) peut commuter entre une première position dans laquelle le parcours de rayon (B) est couplé à l'intérieur de l'axe de cible (Z), et une seconde position dans laquelle le rayon laser (L) est couplé à l'intérieur de l'axe de cible (Z).

3. Dispositif selon la revendication 2, **caractérisé en ce que** l'élément de couplage (12) est un prisme (19) qui présente une première surface de réflexion pour le couplage du parcours de rayon (B) dans l'axe de cible (Z), et une seconde surface de réflexion pour le couplage du rayon laser (L) à l'intérieur de l'axe de cible (Z).

4. Dispositif selon la revendication 3, **caractérisé en ce que** le dispositif d'observation (10) et le dispositif laser (11) sont disposés ensemble, par interposition du prisme (19), dans une douille (9), la douille (9) étant déplaçable le long de son axe longitudinal et orientée de manière définie par rapport à l'axe de cible (Z), dans deux positions finales de sa course de réglage.

5. Dispositif selon la revendication 4, **caractérisé en ce que** le parcours de rayon (B) et le rayon laser (L) sont orientés dans la direction de l'axe longitudinal de la douille (9) et l'axe de cible (Z) forme un angle droit avec l'axe longitudinal de la douille (9).

6. Dispositif selon la revendication 1 ou 2, **caractérisé en ce que** l'élément de couplage (12) est un miroir pivotant autour d'un axe de rotation, qui, suivant un premier angle de réglage couple soit le parcours de rayon (B), soit le rayon laser (L), à l'intérieur de l'axe de cible (Z) et, suivant un second angle de réglage, couple l'autre rayon correspondant à l'intérieur de l'axe de cible (Z).

7. Dispositif selon la revendication 1, **caractérisé en ce que** l'élément de couplage (12) est un dispositif optique de déviation, orienté de manière fixe par rapport à l'appareil géodésique, avec une couche (24) optiquement sélective, la couche (24) étant perméable, dans le domaine visuel à la lumière parvenant suivant un angle d'incidence oblique, mais réfléchissante pour la lumière laser parvenant suivant cet angle d'incidence, ou étant réfléchissante dans le domaine visuel pour la lumière parvenant suivant un angle d'incidence oblique, mais perméable à la lumière laser incidente.

8. Dispositif selon la revendication 6 ou 7, **caractérisé en ce que** le parcours de rayon (B) et l'axe de cible (Z) sont disposés orthogonalement l'un à l'autre.

9. Dispositif selon l'une des revendications 6 à 8, **caractérisé en ce que** le rayon laser (L) et l'axe de cible (Z) sont disposés orthogonalement l'un à l'autre.

10. Dispositif selon l'une des revendications 1 à 9, **caractérisé en ce que** dans le parcours de rayon (B) est disposé un trait de repère à orienter vers le point du sol.
